# EUROPEAN PATENT SPECIFICATION

(11) **EP 0 637 866 B1**
(45) Date of publication and mention of the grant of the patent: **30.08.2000**
(21) Application number: 94202197.3
(22) Date of filing: 28.07.1994
(51) Int. Cl.: H02H 11/00

(54) **A control and protection device for an electric system**
Eine Steuer- und Schutzeinrichtung für ein elektrisches System
Un dispositif de contrôle et de protection pour un système électrique

(30) Priority: 02.08.1993 IT MI931759
(43) Date of publication of application: 08.02.1995
(73) Proprietor: BTICINO S.p.A., 20154 Milano (IT)
(72) Inventor: Fabrizi, Fabrizio, I-24100 Bergamo (IT)
(74) Representative: Maggioni, Claudio

(56) References cited:
- EP-A- 0 149 046
- DE-A- 3 520 904
- GB-A- 2 114 389
- US-A- 3 611 036

## Description

This invention relates to electric systems, and in particular to a control and protection device for an electric system powered from a power distribution line via a switch.

Electric systems and their users need, as a matter of course, to be protected against the occurrence of various potentially dangerous situations, such as short-circuits, overloads, and insulation failures to ground or to any conductors with which a user might come in contact. To meet this requirement, protection devices have been developed which are usually incorporated to the disconnect switch through which the system is linked to a power supply line, which devices are effective to detect such danger situation and act on the switch to open its contacts.

Such devices have a drawback inherent to their very principle of operation, that is they can only detect any failures likely to result in the above-mentioned danger situations while the system is in a live state. Especially on the occasion of an insulation failure or a short, this may become a serious danger for a person that, in operating the system, should touch a non-insulated appliance or close the switch in a shorted load condition.

Document EP-A-0149046 discloses a control and protection device according to the preamble of claim 1, which device operates a coil driven switch connecting a network to the mains in dependence on the condition of a network. The device comprises an impedance measuring device, a processing unit and a source of a measuring voltage. The impedance measuring device has current sensors to sense currents in the phase wires of the mains and to detect any currents from the phase wires to ground. The processing unit compares the measured impedance values with reference values and provides corresponding output signals to the switch coil to open the switch if a dangerous condition is detected in the network.

The object of the invention is to provide a control and protection device of this kind which is suitable for a manually operated switch.

The object of the invention is achieved by a control and protection device as defined in claim 1.

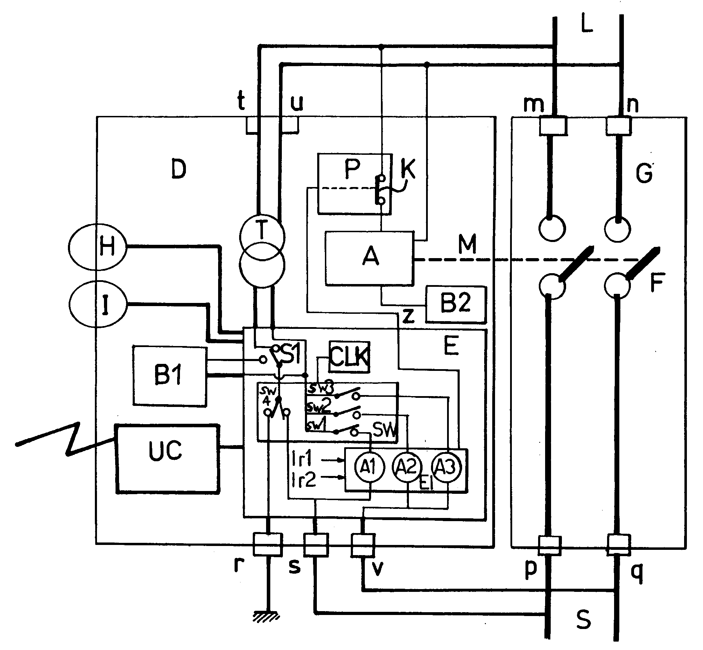

The invention will be more more clearly understood from the following detailed description of an embodiment thereof, given by way of example and not of limitation with reference to the accompanying drawing, the one Figure whereof shows, in substantially block diagram form, a device according to the invention as coupled to a disconnect switch.

Specifically, a bipolar disconnect switch G, e.g. a differential switch protected against short circuits and overcurrents, is connected by its input terminals m and n to a line L from the AC mains, and by its output terminals p and q to an electric system S to be powered. The switch G has a pair of contacts F which can be opened or closed by means of a conventional manual operation lever, not shown. Coupled to the switch G is a control and protection device, generally denoted by the reference character D, according to the invention. This device comprises a means of inhibiting closure of the switch in the form of a low-voltage release A, e.g. that described in Italian Patent No. 1,216,585 to Bassani Ticino, and an electronic circuit E having two terminals s and v connected to the system S and a third terminal r connected to a ground clamp. The low-voltage release A is powered from the line L and consists basically of an electromagnet, a moving armature operated by the electromagnet, and a mechanical link member, designated M, between the moving armature and the switch contacts F.

The circuit E is powered from the line L through a safety transformer T, or a battery B1 in the event of power outage on the line. A changeover switch S1, controlled to "make" by the line voltage, is conventionally arranged to serve this function. The electronic circuit E, shown in a greatly simplified block diagram form in the drawing, basically comprises a set EI of three current meters A1, A2, A3, a changeover device SW represented by three switches SW1, SW2, SW3 and a changeover switch SW4, and a timer CLK. The timer controls the changeover device such that the three switches SW1, SW2 and SW3 will be closed alternately and consecutively and that the changeover switch SW4 set to the closed contact position to the terminal connected to the ground clamp when the switches SW1 and SW2 are closed, and to the other position of closed contact to the terminal S when the contact SW3 is closed.

The output terminal z of the circuit E, being the output of the set EI, is connected to the control terminal of a switching device P which has a normally closed contact K connected in one of the power supply leads to the release A. The device P may be a solid-state static switch or an optoelectronic coupler providing galvanic isolation of the system S from the line L upon the switch G "breaking". In this embodiment, the device D includes a module UC connected to the circuit E for remote controlling and/or signalling, as well as optical and sound indicator members H, I to display certain operating conditions of the device.

The device operation will now be considered in the condition where the switch contacts F are open. The circuit E performs some measurements of certain electric parameters of the system. In particular, it applies, to the input terminals of the system S, a safe low-value test voltage, conformant with the safety regulations for electric systems, which voltage is supplied from the secondary winding of the transformer T or the battery B1, and measures the current being caused to flow through the system by this voltage. In the closed state of the switch SW3, if the current measured does not exceed a predetermined safe value represented by the current Ir1 in the drawing, no signal is issued on the output z of the circuit E, and the switch K stays closed. Under this condition, the low-voltage release A is powered as normal and will not interfere with the switch G which can, therefore, be closed by operation of its manual control lever.

Conversely, where the current measured exceeds the predetermined value, this is understood to mean that the system impedance has dropped below an acceptable safe limit, e.g. due to a failure in a load connected to the system, and the circuit E will act on the device P to open the contact K. The low-voltage release A is no longer under power, and accordingly, will act on the switch G through the mechanical link member M to lock its contacts F to the open position.

Another measurement performed by the circuit E consists of finding out any ground failures. This is carried out with the switch SW1 or SW2 in the closed state. Here the test voltage is applied between either terminal s or v and the ground clamp. If the current measured by either of the current meters A1 and A2 is below a second reference current Ir2, the circuit E issues a signal on its ouput z to so control the device P as to open the contact K, and accordingly, inhibit closure of the contacts F of switch G.

Where the contacts F of switch G are closed, the existence of a malfunction in the system would cause the automatic release devices of the switch to be operated, the switch being responsive, as previously mentioned, to short circuits, overloads, and current leaks to ground. Under this condition, the electronic circuit E can be deactuated to only retain a signalling function through the indicators H and I and/or the module UC.

As can be seen, having the circuit E powered through a safety transformer T and the circuit E coupled to the low-voltage release A through an optoelectronic device ensures full galvanic isolation between the line L and the system S in the open state of the switch.

With the line voltage out, the release coil A would be powered from the battery B2 and left under power for a predetermined time period which may be the battery discharge time.

In view of the inventive device allowing a system to be tested even with no voltage from the power distribution line, it can advantageously be used to ascertain the operability of a newly installed system, prior to applying a normal operating voltage thereto.

The remote control and signalling module UC allows the circuit operation to be controlled from a remote station, e.g. to receive actuation commands for the circuit E, commands to change the test values, etc., or to transmit information about measurements, any alarm state, etc. to the remote station.

As can be appreciated from the foregoing, the device of this invention does overcome the drawbacks of the prior art by enabling diagnostics of the system in the open switch state, that is in a fully safe manner for both the user and the system itself, using a safety source of a low voltage. Full safety is also ensured by that the test circuit is powered from the line through a safety transformer or a battery.

While one embodiment only of the invention has been described and illustrated, many changes and modifications may be made thereunto within the scope of the inventive concept defined by the appended claims. For example, instead of using a low-voltage release as described, any other electromagnet device could be used; the electronic circuit E could be arranged to detect any ground failures without material connection to a ground clamp, or in such a manner that the various system tests can be carried out continuously and at one time, rather than consecutively; the device P could be a magnetic, capacitive or another type of coupling device, instead of an optolelectronic device. Finally, the device of this invention may be fabricated and enclosed within a separate case for attachment to the disconnect switch, or may be incorporated to said switch.

## Claims

1. A control and protection device for an electric system (S) powered from a power distribution line (L) via a switch (G), said control and protection device comprising means (A,M) for inhibiting closure of the switch, and circuit means (E), connected to the input terminals (p,q) of the electric system (S) and to a power source (L,B1), effective to measure at least one electric parameter of the system in the open state of the switch and to operate the inhibit means (A,M) according to the parameter measured,
characterized in that the inhibit means (A,M) comprises an electromagnet (A), a moving armature actuated by the electromagnet, and a mechanical link member (M) between the moving armature and the switch (G) which prevents the switch from being closed upon operation of the inhibit means.

2. A device according to Claim 1, characterized in that the power source (L,B1) comprises a safety voltage source (T,B1) being connected, for the measurement, to the electric system (S) through the circuit means (E), and that the system (S) own impedance is an electric parameter for measurement.

3. A device according to Claim 1, characterized in that the power source (L,B1) comprises a safety voltage source (T,B1) being connected, for the measurement, to the electric system (S) through the circuit means (E), and that the system insulation from ground is an electric parameter for measurement.

4. A device according to Claim 1, characterized in that the power source (L,B1) comprises a safety power source (T,B1) being connected, for the measurement, to the electric system (S) through the circuit means (E), and that the parameters for measurement are the system own impedance and insulation from ground.

5. A device according to Claim 4, characterized in that the two electric parameters are measured consecutively.

6. A device according to Claim 4, characterized in that the two electric parameters are measured continuously and simultaneously.

7. A device according to either Claim 2, 4, 5 or 6, characterized in that the circuit means (E) comprises means (ET,SW) for measuring the current flowing through the system when the safety voltage source (T,B1) is connected thereto, to compare that measured current with a first predetermined reference current (Ir1) and operate said inhibit means (A,M) if the measured current exceeds said first reference current (Ir1).

8. A device according to any of Claims 3 to 7, characterized in that the circuit means (E) comprises means (EI,SW) for measuring the current flowing between a ground terminal and each of the system input terminals (p,q) when the safety voltage source (T,B1) is connected thereto, to compare that measured current with a second predetermined reference current (Ir2) and operate said inhibit means (A,M) if the measured current exceeds said second reference current (Ir2).

9. A device according to any of the preceding Claims, characterized in that the electromagnet (A) is connected to a power source (L,B2), and that the inhibit means (A,M) is operated with the electromagnet (A) in the off state.

10. A device according to Claim 9, characterized in that the power source is the power distribution line (L) ahead of the switch (G), and that it comprises a switching device (P) adapted to be operated by the circuit means (E) to break the connection between the electromagnet (A) and its power source, thereby operating the inhibit means (A,M).

11. A device according to Claim 10, characterized in that the switching device (P)is a solid-state static switch.

12. A device according to Claim 10, characterized in that the switching device (P) is an optoelectronic coupler.

13. A device according to Claim 9, characterized in that the power source for the electromagnet (A) is a battery (B2).

14. A device according to any of the preceding claims, characterized in that the safety voltage source comprises a transformer (T) connected to the power distribution line (L) ahead of the switch (G).

15. A device according to any of Claims 1 to 13 above, characterized in that the safety voltage source comprises a battery (B1).

16. A device according to any of the preceding claims, characterized in that it includes a remote control and signalling means (UC) connected to the circuit means (E) and effective to link said circuit means with a remote station for receiving and/or transmitting data.

## Patentansprüche

1. Eine Steuerungs- und Schutzvorrichtung für ein elektrisches System (S), das aus einer Leistungsverteilungsleitung (L) über einen Schalter (G) mit Leistung versorgt wird, wobei die Steuerungs- und Schutzvorrichtung eine Einrichtung (A, M) zum Verhindern des Schließens des Schalters und eine Schaltungseinrichtung (E) aufweist, die mit den Eingangsanschlüssen (p, q) des elektrischen Systems (S) und mit einer Leistungsquelle (L, B1) verbunden ist, und die wirksam ist, um zumindest einen elektrischen Parameter des Systems in dem offenen Zustand des Schalters zu messen, und um die Verhinderungseinrichtung (A, M) gemäß dem gemessenen Parameter zu betätigen,
dadurch gekennzeichnet, daß
die Verhinderungseinrichtung (A, M) einen Elektromagneten (A), einen sich bewegenden Läufer, der durch den Elektromagneten betätigt wird, und ein mechanisches Verbindungsbauglied (M) zwischen dem sich bewegenden Läufer und dem Schalter (G) aufweist, die auf die Betätigung der Verhinderungseinrichtung hin verhindert, daß der Schalter geschlossen wird.

2. Eine Vorrichtung gemäß Anspruch 1, dadurch gekennzeichnet, daß die Leistungsquelle (L, B1) eine Sicherheitsspannungsquelle (T, B1) aufweist, die für die Messung über die Schaltungseinrichtung (E) mit dem elektrischen System (S) verbunden ist, und daß die Eigenimpedanz des Systems (S) ein elektrischer Parameter für eine Messung ist.

3. Eine Vorrichtung gemäß Anspruch 1, dadurch gekennzeichnet, daß die Leistungsquelle (L, B1) eine Sicherheitsspannungsquelle (T, B1) aufweist, die für die Messung über die Schaltungseinrichtung (E) mit dem elektrischen System (S) verbunden ist, und daß die Systemisolation gegenüber Masse ein elektrischer Parameter für eine Messung ist.

4. Eine Vorrichtung gemäß Anspruch 1, dadurch gekennzeichnet, daß die Leistungsquelle (L, B1) eine Sicherheitsleistungsquelle (T, B1) aufweist, die für die Messung über die Schaltungseinrichtung (E) mit dem elektrischen System (S) verbunden ist, und daß die Parameter für eine Messung die Eigenimpedanz des Systems und die Isolation gegenüber Masse sind.

5. Eine Vorrichtung gemäß Anspruch 4, dadurch gekennzeichnet, daß die zwei elektrischen Parameter nacheinander gemessen werden.

6. Eine Vorrichtung gemäß Anspruch 4, dadurch gekennzeichnet, daß die zwei elektrischen Parameter kontinuierlich und gleichzeitig gemessen werden.

7. Eine Vorrichtung gemäß einem der Ansprüche 2, 4, 5 oder 6, dadurch gekennzeichnet, daß die Schaltungseinrichtung (E) eine Einrichtung (EI, SW) zum Messen des Stromflusses durch das System aufweist, wenn die Sicherheitsspannungsquelle (T, B1) mit derselben verbunden ist, um den gemessenen Strom mit einem ersten, vorbestimmten Referenzstrom (Ir1) zu vergleichen, und um die Verhinderungseinrichtung (A, M) zu betätigen, falls der gemessene Strom den ersten Referenzstrom (Ir1) übersteigt.

8. Eine Vorrichtung gemäß einem der Ansprüche 3 bis 7, dadurch gekennzeichnet, daß die Schaltungseinrichtung (E) eine Einrichtung (EI, SW) zum Messen des Stromflusses zwischen einem Masseanschluß und jedem der Systemeingangsanschlüsse (p, q) aufweist, wenn die Sicherheitsspannungsquelle (T, B1) mit derselben verbunden ist, um den gemessenen Strom mit einem zweiten, vorbestimmten Referenzstrom (Ir2) zu vergleichen, und um die Verhinderungseinrichtung (A, M) zu betätigen, falls der gemessene Strom den zweiten Referenzstrom (Ir2) übersteigt.

9. Eine Vorrichtung gemäß einem der vorhergehenden Ansprüche, dadurch gekennzeichnet, daß der Elektromagnet (A) mit einer Leistungsquelle (L, B2) verbunden ist, und daß die Verhinderungseinrichtung (A, M) betätigt wird, wenn der Elektromagnet (A) in dem Aus-Zustand ist.

10. Eine Vorrichtung gemäß Anspruch 9, dadurch gekennzeichnet, daß die Leistungsquelle die Leistungsverteilungsleitung (L) vor dem Schalter (G) ist, und daß dieselbe eine Umschaltvorrichtung (P) aufweist, die angepaßt ist, um von der Schaltungseinrichtung (E) betätigt zu werden, um die Verbindung zwischen dem Elektromagneten (A) und dessen Leistungsversorgung zu unterbrechen, wodurch die Verhinderungseinrichtung (A, M) betätigt wird.

11. Eine Vorrichtung gemäß Anspruch 10, dadurch gekennzeichnet, daß die Umschaltvorrichtung (T) ein statischer Festkörperschalter ist.

12. Eine Vorrichtung gemäß Anspruch 10, dadurch gekennzeichnet, daß die Umschaltvorrichtung (P) ein optoelektronischer Koppler ist.

13. Eine Vorrichtung gemäß Anspruch 9, dadurch gekennzeichnet, daß die Leistungsquelle für den Elektromagneten (A) eine Batterie (B2) ist.

14. Eine Vorrichtung gemäß einem der vorhergehenden Ansprüche, dadurch gekennzeichnet, daß die Sicherheitsspannungsquelle einen Transformator (T) aufweist, der vor dem Schalter (G) mit der Leistungsverteilungsleitung (L) verbunden ist.

15. Eine Vorrichtung gemäß einem der vorhergehenden Ansprüche 1 bis 13, dadurch gekennzeichnet, daß die Sicherheitsspannungsquelle eine Batterie (B1) aufweist.

16. Eine Vorrichtung gemäß einem der vorhergehenden Ansprüche, dadurch gekennzeichnet, daß dieselbe eine Fernsteuerungs- und Signalisierungseinrichtung (UC) aufweist, die mit der Schaltungseinrichtung (E) verbunden ist und wirksam ist, um die Schaltungseinrichtung mit einer Fernstation zum Empfangen und/oder Übertragen von Daten zu verbinden.

## Revendications

1. Dispositif de commande et de protection pour un système électrique (S) électriquement alimenté à partir d'une ligne (L) de distribution de courant électrique via un interrupteur (G), ledit dispositif de commande et de protection comprenant un moyen (A, M) servant à empêcher la fermeture de l'interrupteur, et un moyen formant un circuit (E), connecté aux bornes d'entrée (p, q) du système électrique (S) et à une source d'alimentation électrique (L, B1) et ayant pour action de mesurer au moins un paramètre électrique du système dans l'état ouvert de l'interrupteur et d'actionner le moyen d'empêchement (A, M) en fonction du paramètre mesuré, caractérisé en ce que le moyen d'empêchement (A, M) comprend un électroaimant (A), une armature mobile actionnée par l'électroaimant, et un élément de liaison mécanique (M) disposé entre l'armature mobile et l'interrupteur (G), qui empêche que l'interrupteur ne se ferme lors de l'actionnement du moyen d'empêchement.

2. Dispositif selon la revendication 1, caractérisé en ce que la source d'alimentation électrique (L, B1) comprend une source de tension de sécurité (T, B1) qui est connectée pour la mesure, au système électrique (S) via le moyen formant un circuit (E), et en ce que l'impédance propre du système (S) est un paramètre électrique destiné à la mesure.

3. Dispositif selon la revendication 1, caractérisé en ce que la source d'alimentation électrique (L, B1) comprend une source de tension de sécurité (T, B1) qui est connectée, pour la mesure, au système électrique (S) via le moyen formant un circuit (E), et en ce que l'isolation du système vis-à-vis de la masse électrique est un paramètre électrique destiné à la mesure.

4. Dispositif selon la revendication 1, caractérisé en ce que la source d'alimentation électrique (L, B1) comprend une source d'alimentation électrique de sécurité (T, B1) qui est connectée, pour la mesure, au système électrique (S) via le moyen formant un circuit (E), et en ce que les paramètres destinés à la mesure sont l'impédance propre du système et son isolation vis-à-vis de la masse électrique.

5. Dispositif selon la revendication 4, caractérisé en ce que les deux paramètres électriques sont mesurées consécutivement.

6. Dispositif selon la revendication 4, caractérisé en ce que les deux paramètres électriques sont mesurés de façon continue et simultanée.

7. Dispositif selon l'une quelconque des revendications 2, 4, 5 et 6, caractérisé en ce que le moyen formant un circuit (E) comprend un moyen (ET, SW) servant à mesurer le courant passant dans le système lorsque la source de tension de sécurité (T, B1) lui est connectée, afin de comparer le courant mesuré avec un premier courant de référence prédéterminé (Ir1) et d'actionner ledit moyen d'empêchement (A, M) si le courant mesuré dépasse ledit premier courant de référence (Ir1).

8. Dispositif selon l'une quelconque des revendications 3 à 7, caractérisé en ce que le moyen formant un circuit (E) comprend un moyen (EI, SW) servant à mesurer le courant qui passe entre une borne de masse électrique et chacune des bornes d'entrée (p, q) du système lorsque la source de tension de sécurité (T, B1) lui est connectée, afin de comparer ce courant mesuré avec un deuxième courant de référence prédéterminé (Ir2) et d'actionner ledit moyen d'empêchement (A, M) si le courant mesuré dépasse ledit deuxième courant de référence (Ir2).

9. Dispositif selon l'une quelconque des revendications précédentes, caractérisé en ce que l'électroaimant (A) est connecté à une source d'alimentation électrique (L, B2), et en ce que le moyen d'empêchement (A, M) est actionné alors que l'électroaimant (A) est dans l'état inactif.

10. Dispositif selon la revendication 9, caractérisé en ce que la source d'alimentation électrique est la ligne (L) de distribution de courant électrique placée en avant de l'interrupteur (G), et en ce qu'elle comprend un dispositif de commutation (P) conçu pour être actionné par le moyen formant un circuit (E) afin de couper la connexion entre l'électroaimant (A) et sa source d'alimentation électrique, ceci ayant pour effet d'actionner le moyen d'empêchement (A, M).

11. Dispositif selon la revendication 10, caractérisé en ce que le moyen de commutation (P) est un commutateur statique du type état solide.

12. Dispositif selon la revendication 10, caractérisé en ce que le dispositif de commutation (P) est un coupleur optoélectronique.

13. Dispositif selon la revendication 9, caractérisé en ce que la source d'alimentation électrique associée à l'électroaimant (A) est une batterie électrique (B2).

14. Dispositif selon l'une quelconque des revendications précédentes, caractérisé en ce que la source de tension de sécurité comprend un transformateur (T) connecté à la ligne (L) de distribution de courant électrique en avant de l'interrupteur (G).

15. Dispositif selon l'une quelconque des revendications 1 à 13, caractérisé en ce que la source de tension de sécurité comprend une batterie électrique (B1).

16. Dispositif selon l'une quelconque des revendications précédentes, caractérisé en ce qu'il comporte un moyen de commande à distance et de signalisation (UC) connecté au moyen formant un circuit (E) et ayant pour effet de lier ledit moyen formant un circuit avec une station éloignée destinée à recevoir et, ou bien, émettre des données.
